# EUROPEAN PATENT SPECIFICATION

(11) **EP 2 893 173 B1**
(45) Date of publication and mention of the grant of the patent: **28.01.2026**
(21) Application number: 13759263.0
(22) Date of filing: 13.08.2013
(51) Int. Cl.: F02D 41/00, F02D 19/06, F02D 41/22, F02D 35/02, F02D 41/14, F02D 41/30

(54) **METHOD OF OPERATING A MULTI-CYLINDER INTERNAL COMBUSTION PISTON ENGINE**
VERFAHREN ZUM BETREIBEN EINER MEHRZYLINDRIGEN KOLBEN-BRENNKRAFTMASCHINE
PROCÉDÉ DE FONCTIONNEMENT D'UN MOTEUR À COMBUSTION À PISTON MULTICYLINDRE

(30) Priority: 17.08.2012 FI 20125851
(43) Date of publication of application: 15.07.2015
(73) Proprietor: Wärtsilä Finland Oy, 65100 Vaasa (FI)
(72) Inventor: FORS, Patrik, FI-65300 Vasa (FI); GRÖNLUND, Tore, FI-65610 Mustasaari (FI); HÄGGDAHL, Tore, FI-65610 Smedsby (FI); NUORMALA, Kimmo, FI-65280 Vaasa (FI); PORTIN, Kaj, FI-65300 Vaasa (FI); WILLIAMSSON, Jonas, FI-65530 Helsingby (FI)
(74) Representative: Genip Oy
(86) International application number: PCT/FI2013/050793
(87) International publication number: WO 2014/027138

(56) References cited:
- WO-A1-2012/094871
- FR-A1- 2 840 361
- US-A1- 2009 024 301
- US-A1- 2010 170 470

## Description

### Technical field

Invention relates method of operating a multi-cylinder internal combustion piston engine. Particularly, invention relates to operating such an engine with at least two different fuels.

### Background art

Reciprocating piston engine is a known power source for electricity production in stationary power plants as well as in marine vessels. It is also known to operate such engine by making use of gaseous fuel. For power plants using gas as fuel, it is usually possible to feed the power plant with gas of various qualities, more specifically various heat values. Usually, in order to provide reliable operation of the engine the engine has certain requirements for the fuel quality, also in the terms of the heat value.

Safe and reliable use of a gas engine, which here means a piston engine running on gaseous fuel, particularly as a marine engine, sets special requirements for the fuel feed system, the most important of which is that unexpected shut down of the engine is not acceptable under any circumstances. Because of this, a gas engine as a marine engine comprises a backup system in the fuel feed system. Typically, the gaseous fuel used as main fuel in the gas engine is fed into the combustion chamber of the engine mixed with air. It is ignited by injecting a very small amount of ignition fuel, which is ignited due to the existing conditions and thereby also ignites the gaseous fuel. In this case, as far as the gaseous fuel is concerned, the engine is run according to the otto-process. In case there is a malfunction in the above-mentioned operation affecting the running of the engine, the engine can be provided with a backup fuel feed systems based on using only liquid fuel. In this case there is a transfer from running on gas to running on liquid fuel and the engine is run according to the diesel process.

In US 2010170470 A1 there is described a fuel delivery system for an engine as well as a method of its operation. The fuel delivery system includes a first fuel injector for delivering a first fuel to a cylinder of the engine, a second fuel injector for delivering a second fuel to the cylinder, an electrical relay system disposed between a first electrical potential and each of the first and second fuel injectors, an electronic driver disposed between a second electrical potential and each of the first and second fuel injectors, and a control module. The control module is configured to switch the electrical relay system between first and second positions to select one of the first and second fuels, respectively. The electronic driver is closed by the control module to deliver the selected one of the first or second fuel to the first cylinder via a respective one of the first or second fuel injectors. In US 2010170470 the fuel injectors for delivering the first fuel are activated or deactivated all together, and the fuel injectors for delivering the second fuel are activated or deactivated all together, respectively. Thus, with this arrangement some shortcoming will still remain, particularly in respect of controllability and flexibility. Document US 2009024301 A1 discloses an engine management and fuel delivery system which allows an internal combustion engine to operate on liquid fuel or compressed natural gas. A first set of fuel injectors is configured to deliver liquid fuel to the cylinders. A second set of fuel injectors is configured to deliver natural gas to the cylinders. An electronic controller is configured to generate fuel injection signals for one of the sets of injectors. An injector selector is configured to direct such fuel injection signals to either the first set of fuel injectors or the second set of fuel injectors based on a fuel type command. The fuel type command is indicative of a desired fuel type selected from either liquid fuel or CNG fuel. The fuel type command is synchronized in accordance with an engine crankshaft position signal in order to coordinate the switchover, for each one of the fuel injection signals, one by one, as each fuel injection event is completed.

It is an object of the invention to provide method of operating a multi-cylinder internal combustion engine by means of which the operation of the engine is more reliable during the change-over of the fuel.

### Disclosure of the Invention

Objects of the invention can be met substantially as is disclosed in the independent claim and in the other claims describing more details of different embodiments of the invention.

According to the invention in a method of operating a multi-cylinder internal combustion piston engine, the engine comprising a gaseous fuel feed system for liquid fuel and a liquid fuel feed system for gaseous fuel, while the engine is running
(a) liquid fuel is introduced to the engine during work stage and the engine is operated by combusting the liquid fuel in at least two cylinders;
(b) the introduction of liquid fuel from the liquid fuel feed system is stopped to a first one of the at least two cylinders, and subsequently the introduction of gaseous fuel to the first cylinder is commenced introducing the gaseous fuel to the engine during gas exchange stage;
(c) amount of injected gaseous fuel in the first cylinder is adjusted to reach predetermined conditions of combustion process in the first cylinder; and
(d) the gaseous fuel is introduced to and combusted in the second one of the at least two cylinders,
(e) the same amount of injected gaseous fuel, as adjusted to reach predetermined conditions of combustion process in the first cylinder, is injected to the second cylinder in the step (d), and the amount of gaseous fuel adjusted in connection with the first cylinder in the step (c) is used in a starting stage of combustion process of the gaseous fuel in the second cylinder. This way there is only one cylinder at a time in which such a transition of combusted fuel is occurring and the overall operation of the engine is stable. This also enables a transfer directly from diesel (liquid fuel) to otto (gaseous fuel) combustion immediately to minimize the disturbance of
the combustion. The exactly needed gas amount is not known, so it will be adjusted quickly with the first transferred cylinder and then the other cylinders are transferred with the same gas amount to enable smooth transfer.

Control parameters of combustion process as initial control parameters of combustion process for commencing the combustion process with the first fuel in the first cylinder may be stored in or made available to a control system of the engine.

According to an embodiment of the invention the step of controlling and setting control parameters of combustion process of the first fuel in the first cylinder to reach predetermined conditions of combustion comprises at least setting the charge air pressure.

According to an embodiment of the invention the second fuel is introduced to the engine and the engine is operated by combusting the second fuel in at least two cylinders; the introduction of second fuel is stopped to a first one of the at least two cylinders, and subsequently the introduction of first fuel to the first cylinder is commenced; control parameters of combustion process of the first fuel in the first cylinder are controlled and set to reach predetermined conditions of combustion; the first fuel is introduced to and combusted in the second one of the at least two cylinder; the control parameters set in connection with combustion the first fuel in the first cylinder are used to control the combustion process of the first fuel in the second cylinder and the control parameters set in connection with the first cylinder are used to control a starting stage of combustion process of the first fuel in the second cylinder. Advantageously the starting stage lasts shortest period of time allowed by the used control system, being only one ignition in the cylinder. Particularly, since the gaseous fuel is injected during gas exchange stage and liquid fuel is injected during work stage, the selection of used fuel is made after ignition of liquid fuel but before the subsequent gas exchange stage i.e. before next possible window for injecting the gaseous fuel.

According to an embodiment of the invention the second fuel is introduced to the engine and the engine is operated by combusting the second fuel in at least two cylinders; the introduction of second fuel is stopped to a first one of the at least two cylinders, and subsequently the introduction of first fuel to the first cylinder is commenced; control parameters of combustion process of the first fuel in the first cylinder are controlled and set to reach predetermined conditions of combustion; the first fuel is introduced to and combusted in the second one of the at least two cylinder; the control parameters set in connection with combustion the first fuel in the first cylinder are used to control the combustion process of the first fuel in the second cylinder and the control parameters set in connection with the first cylinder are used to control the combustion process of the first fuel in all other cylinders of the engine during a starting stage. This way all subsequent fuel changes are performed without undue delay.

According to an embodiment of the invention liquid fuel is introduced to the engine and the engine is operated by combusting the liquid fuel in at least two cylinders, the introduction of liquid fuel is stopped to a first one of the at least two cylinders, and subsequently the introduction of gaseous fuel to the first cylinder is commenced, combustion process of the gaseous fuel in the first cylinder is controlled to reach predetermined conditions and gaseous fuel is introduced to and combusted in the second one of the at least two cylinders.

According to an embodiment of the invention gaseous fuel is introduced to the engine and the engine is operated by combusting the gaseous fuel in at least two cylinders, the introduction of gaseous fuel is stopped to a first one of the at least two cylinders, and subsequently the introduction of liquid fuel to the first cylinder is commenced, combustion process of the liquid fuel in the first cylinder is controlled to reach predetermined conditions and liquid fuel is introduced to and combusted in the second one of the at least two cylinders.

### Brief Description of Drawings

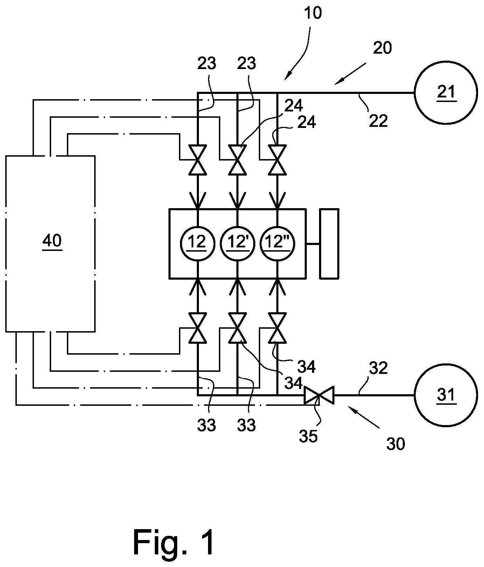

In the following, the invention will be described with reference to the accompanying exemplary, schematic drawing, in which Figure 1 illustrates a fuel feeding system for an internal combustion piston engine comprising a control system according to according to an embodiment of the invention.

### Detailed Description of Drawings

Figure 1 depicts schematically an internal combustion engine 10 having a selected number of cylinders 12, 12',12". The engine is provided with two independent fuel systems, a first fuel system 20 and a second fuel system 30. In this embodiment the first fuel system is a gaseous fuel system and the second fuel system is a liquid fuel system.

The fuel systems are described in very general manner showing only such elements which are related to and necessary for understanding the operation of the engine according to the embodiments of the invention. The first fuel system 20 comprises a source of gaseous fuel 21 from which a first fuel feed line 22 extends to the engine 10. The feed line branches into branch lines 23 to each cylinder 12,12',12" of the engine. Each branch line 23 is provided with a dedicated feed control unit 24. Respectively the second fuel system 30 comprises a source of liquid fuel 31 from which a second fuel feed line 32 extends to the engine 10. The feed line 30 also branches into branch lines 33 to each cylinder 12, 12', 12" of the engine. Each branch line is provided with dedicated feed control unit 34, respectively.

The engine is also provided with a control system 40 which is arranged to control the operation of the engine and particularly the operation of the control units.

When the engine is operating as a gas engine or in gas-mode, the first fuel i.e. the gaseous fuel is introduced to the engine via the first fuel system 20. The engine is operated in normal circumstance by combusting the gaseous fuel in its cylinders in a manner known as such, utilizing otto-cycle. The gaseous fuel may be ignited by means of a spark ignition or by liquid pilot fuel injected into the cylinder by means the second fuel system or a third fuel system (not shown). The engine may also be operated by combusting the liquid fuel in its cylinders in a manner known as such during of which fuel is introduced to the engine via the second fuel system 20 and utilizing diesel-cycle i.e. operating in diesel-mode.

The engine may be operated so that while the engine is running, fuel is introduced to the engine and at least one of the cylinders 12, 12', 12" of the engine is operated by combusting the first fuel i.e. gaseous fuel in the at least one cylinder 12". During the operation of the engine control parameters are acquired from the engine indicating the condition of the combustion process in said cylinder 12" or in each cylinder operating in gas-mode. The engine may be operated so that a first number of the cylinders are operated by combusting gaseous fuel and a second number of the cylinders are operated by combusting liquid fuel, which may be called fuel sharing mode. Thus in the engine the fuel can selected to each cylinder according to need. For example a selected number of cylinders may be run in gas mode and the rest of the cylinders in diesel mode. The optimization of the performance for different fuels can be made by cylinder wise activation and control.

In the method the control parameters acquired from the engine indicating the condition of the gas-mode combustion process in said cylinder 12" are compared to their respective target values and in case a difference between any of the acquired control parameters and its target value is more than a predetermined difference the introduction of the gaseous fuel is stopped to said cylinder and subsequently the introduction of the liquid fuel to the cylinder is commenced while in other cylinders of the engine combustion of the used fuel is proceeded i.e. no transfer of fuel takes place in other cylinders unless so required. Thus, in case of a disturbance in combustion process in a cylinder 12" of the engine when operating in gas mode, only the failed cylinder 12" is transferred to diesel mode. Here such a cylinder in which either a disturbance or a more severe failure takes place, is called as a failure cylinder. The disturbance, or a failure causing the change-over to diesel-mode of the cylinder may be for example heavy knock, misfiring, too high cylinder pressure, high exhaust gas temperature or low exhaust gas temperature.

Instead of operating the engine in the fuel sharing mode the engine may be operated by combusting the first fuel in all of the cylinders of the engine. Also in this embodiment, the control parameters are acquired from the engine indicating the condition of the combustion process in each cylinder of the engine. The control parameters are acquired by or made available to the control system 40. The control parameters are compared to their respective target values by the control system 40 and in case an difference between any of the acquired control parameters and its target value is more than a predetermined difference, in anyone of the cylinders operating in gas mode, the introduction of the gaseous fuel is stopped to such a disturbance cylinder and subsequently the introduction of the liquid fuel to the cylinder is commenced while in other cylinders of the engine combustion of the gaseous fuel is proceeded i.e. no transfer of fuel takes place in other cylinders. Thus, in case of a disturbance in combustion process in a cylinder 12" or all cylinder operating in gas mode, only the failed cylinder 12" is transferred to diesel mode, even if all of the cylinders were operating in gas-mode.

In order to provide even more flexible operation, during the operation of the engine, or at least one of its cylinders, in a gas-mode, the second fuel feed system is maintained at standby state which allows a quick transition of fuel to be combusted should such a disturbance take place which triggers the fuel change in a failure cylinder. In order to accomplish a desired operation the engine is provided two control units 34, 35; a primary control unit 35 in the feed line 32 and a secondary control units 34 in en each branch line 33. The primary control unit comprises a main diesel pump actuator. As an example of realizing this in a certain type of engine the main diesel pump actuator is kept in correct position proportional to engine load and the individual pumps are kept in zero position with one or more pneumatic stop cylinders. In case of one cylinder failure, the pneumatic stop cylinder is deactivated and that cylinder moves to diesel mode. The fine tuning of the main diesel actuator position can be then made based on e.g. cylinder pressure.

Advantageously the operation the second fuel feed system i.e. the liquid fuel system is controlled by making use of the two control units 34, 35 so that the primary control unit 35 is continuously maintained at a correct control position proportional to engine's load regardless of not being the actual active, currently used fuel system, and the secondary control unit 34 is set to maintain the operation of the second fuel system closed. Thus, in case the second fuel system is needed to be operated in connection with anyone of the cylinders activating the secondary control 34 sets the second fuel system in operative state. And, since the primary control system has the correct control position for immediate action the transition is quick and reliable. The secondary control unit is also a dedicated feed control unit for each branch line 33.

During the gas-mode operation the engine's control parameters of combustion process in at least one cylinder of the engine are controlled and set to reach predetermined conditions of combustion. These control parameters are stored or made available to the control system 40 of the engine. And in case any cylinder should have failed i.e. there has been a transfer of fuel to liquid fuel to diesel mode as explained above, the cylinder is be transferred back to gas mode as soon as needed or desired. This takes place so that introduction of gaseous fuel is started and introduction of liquid fuel is stopped to the previously failed cylinder only, and the above mentioned control parameters of gaseous fuel combustion process are used to control the combustion process of the gaseous fuel in said cylinder. This way the correct control parameter may be applied for the combustion right from the beginning.

When the engine is operated by liquid fuel and the operation is desired to be shifted to gas mode a sequence of following steps is executed. It is also conceivable that the engine may be operated so that different fuels are combusted in different cylinders simultaneously, in which case the liquid fuel is combusted in at least two cylinders of the engine to which the sequence of steps is executed.

Thus, the liquid fuel is introduced to the engine 10 via the second fuel system 20, at least to its two cylinders in which the fuel is combusted. Next, when the sequence of the steps is commenced the introduction of second fuel is stopped to a first one 12 of the at least two cylinders 12, 12', and substantially simultaneously, or at the latest for the next cycle of cylinder the introduction of gaseous fuel is commenced to the first cylinder 12.

Control parameters of combustion process of the first fuel in the first cylinder 12 are controlled by the control system 40 and set to reach predetermined conditions which are stored or made available to the control system as well. Subsequently gaseous fuel is introduced to the second one 12' of the at least two cylinders and combusted therein under control of the control system 40. Thus, the change-over of the combusted fuel from the first fuel to the second fuel is performed one cylinder at a time. This way there is only one cylinder at a time in which such a transition is occurring and the overall operation is stable.

In order to further improve the operation of the engine when the gaseous fuel is introduced to the second one 12' of the at least two cylinders and combusted therein, the control parameters set in connection with combustion in the first cylinder 12 are used to control the combustion process of the first fuel in the second cylinder 12'. This way the combustion process of the fuel is controlled in satisfactory manner from the very beginning.

It is possible to use the control parameters set in connection with the first cylinder to control only a starting stage of combustion process of the fuel in the second cylinder, during a predetermined period of time. After the predetermined period of time to control of the combustion process in the second cylinder may be controlled individually or so that the combustion process is taken into account in defining and setting the control parameters. Particularly, since the gaseous fuel is injected during gas exchange stage and liquid fuel is injected during work stage, the selection of used fuel is made before each gas exchange stage i.e. before injecting the gaseous fuel.

Advantageously the control parameters set in connection with the first cylinder are used to control the combustion process of the first fuel in all other cylinders of the engine.

Thus the introduction of gaseous fuel is stopped to the failure cylinder, and subsequently the introduction of liquid fuel to the failure cylinder is commenced and the engine is operated so that liquid fuel is introduced to the failure cylinder, operating in diesel mode, while other cylinders of the engine are operated still by gaseous fuel operating in gas - mode.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. A method of operating a multi-cylinder internal combustion piston engine (10), the engine comprising a gaseous fuel feed system (20) and a liquid fuel feed system (30), in which method, while the engine is running
(a) liquid fuel is introduced to the engine during work stage and the engine is operated by combusting the liquid fuel in at least two cylinders;
(b) the introduction of liquid fuel from the liquid fuel feed system (30) is stopped to a first one of the at least two cylinders, and subsequently the introduction of gaseous fuel to the first cylinder is commenced introducing the gaseous fuel to the engine during gas exchange stage;
(c) an amount of injected gaseous fuel in the first cylinder is adjusted to reach predetermined conditions of combustion process in the first cylinder, wherein control parameters of the combustion process to reach said predetermined conditions are stored in a control system (40); and
(d) the gaseous fuel is introduced to and combusted in the second one of the at least two cylinders,
the method being **characterised in that**
(e) the same amount of injected gaseous fuel, as adjusted to reach predetermined conditions of combustion process in the first cylinder, is injected to the second cylinder in the step (d), and the amount of gaseous fuel adjusted in connection with the first cylinder in the step (c) is used in a starting stage of combustion process of the gaseous fuel in the second cylinder.

2. Method according to claim 1, **characterized by** a further step in which the amount of injected gaseous fuel adjusted in connection with the first cylinder in the step (c) is used in starting stage of the combustion process of the gaseous fuel in all other cylinders of the engine.

## Patentansprüche

1. Verfahren zum Betreiben einer Mehrzylinder-Kolbenbrennkraftmaschine (10), wobei die Maschine ein System zur Versorgung mit gasförmigem Kraftstoff (20) und ein System zur Versorgung mit flüssigem Kraftstoff (30) umfasst, wobei bei diesem Verfahren, während die Maschine läuft,
(a) flüssiger Kraftstoff in die Maschine während der Arbeitsphase eingebracht wird und die Maschine durch Verbrennen des flüssigen Kraftstoffs in mindestens zwei Zylindern betrieben wird;
(b) die Einbringung von flüssigem Kraftstoff von dem System zur Versorgung mit flüssigem Kraftstoff (30) in einen ersten der mindestens zwei Zylinder beendet wird und anschließend die Einbringung von gasförmigem Kraftstoff in den ersten Zylinder begonnen wird, indem der gasförmige Kraftstoff während der Gaswechselphase in die Maschine eingebracht wird;
(c) eine Menge an in den ersten Zylinder eingespritztem gasförmigem Kraftstoff eingestellt wird, um vorbestimmte Bedingungen des Verbrennungsprozesses im ersten Zylinder zu erreichen, wobei Steuerparameter des Verbrennungsprozesses, um die vorbestimmten Bedingungen zu erreichen, in einem Steuerungssystem (40) gespeichert sind; und
(d) der gasförmige Kraftstoff in den zweiten der mindestens zwei Zylinder eingebracht und in ihm verbrannt wird,
wobei das Verfahren **dadurch gekennzeichnet ist, dass**
(e) dieselbe Menge an eingespritztem gasförmigem Kraftstoff wie die, die eingestellt wurde, um vorbestimmte Bedingungen des Verbrennungsprozesses im ersten Zylinder zu erreichen, in Schritt (d) in den zweiten Zylinder eingespritzt wird, und die Menge an gasförmigem Kraftstoff, die in Schritt (c) in Verbindung mit dem ersten Zylinder eingestellt wurde, in einer Anfangsphase des Verbrennungsprozesses des gasförmigen Kraftstoffs im zweiten Zylinder verwendet wird.

2. Verfahren nach Anspruch 1, **gekennzeichnet durch** einen weiteren Schritt, in dem die Menge an eingespritztem gasförmigem Kraftstoff, die in Schritt (c) in Verbindung mit dem ersten Zylinder eingestellt wurde, in einer Anfangsphase des Verbrennungsprozesses des gasförmigen Kraftstoffs in allen anderen Zylindern der Maschine verwendet wird.

## Revendications

1. Procédé de fonctionnement d'un moteur à pistons à combustion interne multicylindre (10), le moteur comprenant un système d'alimentation en carburant gazeux (20) et un système d'alimentation en carburant liquide (30), dans lequel, pendant le fonctionnement du moteur :
(a) du carburant liquide est introduit dans le moteur pendant la phase de travail et le moteur fonctionne par combustion du carburant liquide dans au moins deux cylindres ;
(b) l'introduction de carburant liquide depuis le système d'alimentation en carburant liquide (30) est interrompue dans un premier des au moins deux cylindres, puis l'introduction de carburant gazeux dans le premier cylindre est reprise en introduisant le carburant gazeux dans le moteur pendant la phase d'échange gazeux ;
(c) une quantité de carburant gazeux injecté dans le premier cylindre est ajustée pour atteindre des conditions prédéterminées de combustion dans le premier cylindre, dans lequel les paramètres de commande du processus de combustion nécessaires pour atteindre lesdites conditions prédéterminées sont mémorisés dans un système de contrôle (40) ; et
(d) le carburant gazeux est introduit et brûlé dans le deuxièmes d'au moins deux cylindres, le procédé étant **caractérisé en ce que**
(e) la même quantité de carburant gazeux injecté, est ajustée pour atteindre des conditions prédéterminées du processus de combustion dans le premier cylindre, est injectée dans le deuxième cylindre à l'étape (d), et la quantité de carburant gazeux ajustée pour le premier cylindre à l'étape (c) est utilisée lors d'une phase d'amorçage du processus de combustion du carburant gazeux dans le deuxième cylindre.

2. Procédé selon la revendication 1, **caractérisé par** une étape supplémentaire dans laquelle la quantité de carburant gazeux injecté, ajustée pour le premier cylindre à l'étape (c) est utilisée lors de la phase d'amorçage du processus de combustion du carburant gazeux dans tous les autres cylindres du moteur.
